**Europäisches Patentamt**

(19) **European Patent Office**

**Office européen des brevets**

(11) Publication number: **0 450 865 A2**

# EUROPEAN PATENT APPLICATION

(21) Application number: **91302729.8**

(22) Date of filing: **27.03.91**

(51) Int. Cl.$^5$: **B21C 37/08**

(30) Priority: **06.04.90 GB 9007782**

(43) Date of publication of application:
**09.10.91 Bulletin 91/41**

(84) Designated Contracting States:
**AT DE ES FR GB IT NL**

(71) Applicant: **METSEC PLC**
**Birmingham Road**
**Oldbury, Warley B69 4HE (GB)**

(72) Inventor: **Salt, Ernest**
**24 Birch Croft Road**
**Sutton Coldfield, West Midlands (GB)**
Inventor: **Boswell, Martin**
**73 Lodge Crescent, West Hagley**
**Stourbridge, West Midlands (GB)**

(74) Representative: **Carpenter, David et al**
**MARKS & CLERK Alpha Tower Suffolk Street**
**Queensway**
**Birmingham B1 1TT (GB)**

(54) **Structural support.**

(57) A method of manufacturing an elongate, longitudinally apertured, metal tube comprising the steps of, starting with an elongate metal strip (17) of width corresponding to the peripheral dimension of the tube to be manufactured, forming apertures (16) in the strip (17) in positions directly related to the positions of the apertures required in the tube to be manufacturers, cold roll forming the apertured strip to a substantially closed, tubular, configuration, and, welding the abutting edges (18, 19) of the strip (17) to complete the tube formation.

FIG.4.

EP 0 450 865 A2

The present invention relates to a method of manufacturing a structural support, particularly a longitudinally apertured elongate metal tube preferably but exclusively of rectangular cross-section.

A conventional method of manufacturing an elongate metal tube of rectangular cross-section having a longitudinally extending row or rows of apertures in one or more of the sides of the wall of the tube is to construct the tube by any known tube manufacturing technique, and then to punch or otherwise form the row or rows of apertures in the tube wall as a secondary operation. Such a method of manufacture is disadvantageous inter alia in that the secondary, punching operation involves a risk of distorting the tube, and can entail the use of complex and therefore expensive equipment to provide a support within the confines of the elongate tube against which the punching or stamping tool can cooperate to form the apertures. It is an object of the present invention to provide an economical and convenient method of manufacturing such a structural support.

In accordance with the present invention there is provided a method of manufacturing an elongate, longitudinally apertured, metal tube comprising the steps of,

starting with an elongate metal strip of width corresponding to the peripheral dimension of the tube to be manufactured,

forming apertures in the strip in positions directly related to the positions of the apertures required in the tube to be manufactured,

cold roll forming the apertured strip to a substantially closed, tubular, configuration, and,

welding the abutting edges of the strip to complete the tube formation.

Preferably the method is a substantially continuous process in which plane strip passes through a punching station wherein apertures are formed in the strip, from the punching station through a series of cold roll forming stations at which the closed configuration is progressively formed, and then through a welding station wherein a continuous welding operation welds the abutting edges of the cold roll formed strip.

Preferably a severing station is provided downstream of the welding station so that the tube issuing from the welding station is cut into appropriate lengths to constitute predetermined structural supports.

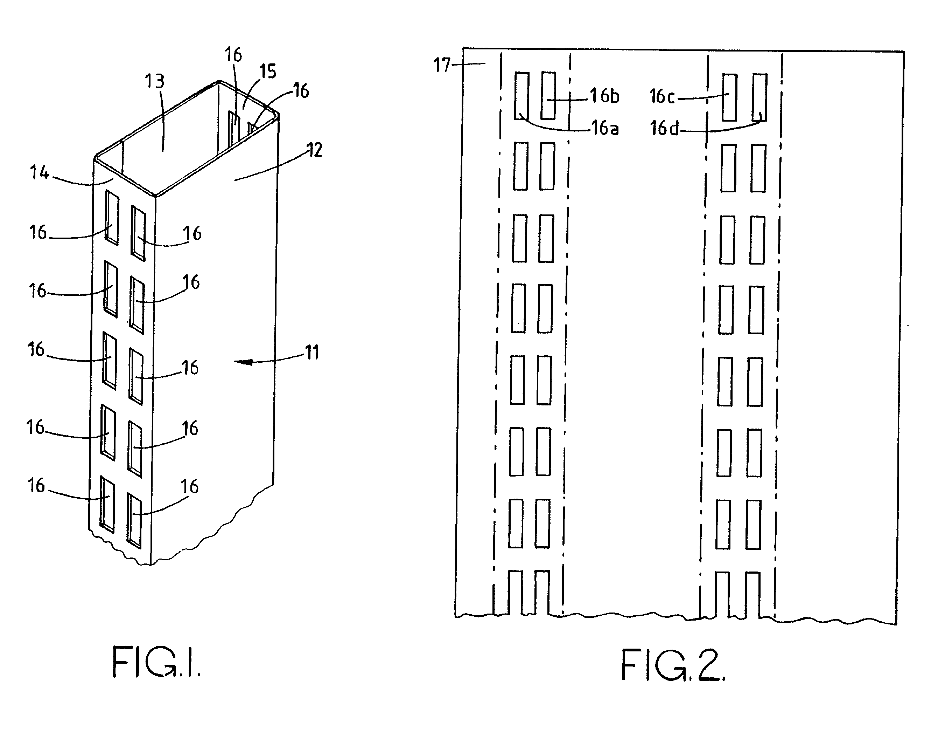

One example of the invention is illustrated in the accompanying drawings wherein Figure 1 is a perspective view of a structural support,

Figure 2 is a plan view of apertured metal strip showing, in chain-dotted lines, the locations of bends which will form the corners of the finished tube,

Figure 3 is a sectional view of the strip shown in Figure 2, at an early stage in the cold roll forming operation, and

Figure 4 is a transverse sectional view of the tube of Figure 1.

Referring to the drawings the structural support which it is desired to manufacture is defined by a predetermined length 11 of an elongate metal tube of rectangular cross-section. The tube has parallel long sides 12, 13 interconnected by parallel short sides 14, 15, the short sides having respective pairs of longitudinally extending parallel rows of elongate rectangular apertures 16. During use of the structural support the apertures 16 provide a range of alternative anchor points for brackets, shelf supports, or the like.

The elongate tube from which appropriate lengths are cut is formed from continuous, planar, mild steel strip conveniently stored in the form of a roll. The strip is illustrated at 17 in Figure 2, and the width of the strip corresponds to the circumference of the tube to be manufactured. Thus generally the width of the strip is equal to the sum of the widths of the sides 12, 13, 14, and 15 of the tube.

Strip from the roll is fed to a welding and guillotine station in which the expiring end of the strip on one roll and the beginning of the strip on another roll are cut and welded together so as to allow the process to run continuously. From the welding and guillotine station, the strip is fed to a roller leveller. The roller leveller acts to flatten the strip and to remove any remaining curvature of the strip resulting from its storage on a roll.

From the roller leveller, the strip is fed into a loop which allows the process to be automatically controlled. The loop acts as a buffer between the parts of the process already described and the remainder of the process. The loop contains a length of strip between the stages of the process, the size of the loop being variable. Variations in the operating speeds of various stages of the process may result in a build up or reduction in the size of the loop. If the loop becomes larger or smaller than predetermined limits, the speeds of various parts of the process are adjusted so that the size of the loop returns to within the predetermined limits.

The strip passes from the loop through a measuring station to a stamping or punching station. The operation of the punching station is controlled by the measuring station so that apertures can be formed in the strip accurately in desired positions.

The punching station produces apertures 16 in the strip in sequence as the strip passes through the punching station. Desirably the punching operation is performed by a reciprocating press tool which, in each single stroke, produces four transversely aligned slots (shown at 16a, 16b, 16c and 16d in Figure 2). In passing through such a punching station the strip of course moves in a series of steps but it is to be understood that as an alternative the apertures 16 could be formed during continuous movement of the strip by passing the strip through the nip of rotating punch or press tools or rolls. The strip issuing from the punching station can pass directly, without any intervening operation, to a series of sets of cold roll forming tools, or, alternatively the strip can be rerolled for storage for subsequent cold roll forming.

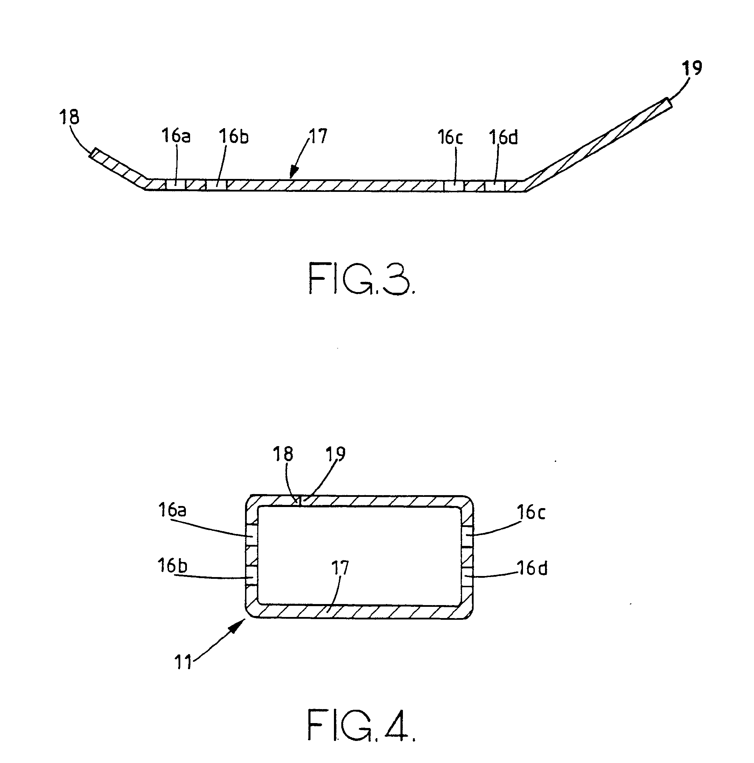

The strip may be fed into the cold roll forming station through an automatically controlled loop of the type described earlier to enable the continuity of the process. The cold roll forming station involves a plurality of sets of shaped rolls which progressively bend the strip from the apertured, planar configuration to the rectangular configuration shown in Figure 4. Figure 3 shows an early stage in the cold roll forming procedure at which the marginal edges of the strip are bent upwardly out of the plane of the remainder of the strip. The chain-dotted lines in Figure 2 illustrate the regions at which bending of the strip takes place to produce the four corners of the tube of rectangular cross-section.

A later set of rolls in the cold roll forming station brings the two opposite edges of the strip 17 into abutting relationship, and while held in this configuration the abutting edges 18, 19 are welded together to form a continuous seam extending along the length of the tube. The welding operation is performed by electrical induction welding techniques in which a high frequency current flow is induced in the material edges as they pass through the welding head of the welding station, the high current flow along the abutting edges 18, 19 and across the interface of the edges 18, 19 heating the material in the region of the interface sufficiently for welding to occur. It will be recognised therefore that the welding is a continuous process which occurs in the cold roll forming station where the edges 18, 19 are pushed together and pass through the welding head of the welding station. The preferred welding technique is known as high frequency welding in which the welding occurs by virtue of eddy currents induced in the tube wall as the tube passes through induction coils in the welding head. Other welding techniques, for example laser welding may be used.

The welded, rectangular section tube issuing from the welding station passes into a severing station in which it is cut into predetermined lengths to define the desired structural supports. The severing station conveniently includes a friction saw which moves longitudinally with the tube as it severs the tube transverse to the tube length. The saw is then returned along the length of the tube through a predetermined distance before gripping the tube and commencing a further transverse cutting operation during which the saw moves longitudinally with the tube. Other methods may be used in the severing station to cut the tube into structural supports of the desired length. For example, the saw could be replaced with a press tool cut off.

It will be recognised that other rectangular configurations could be produced in exactly the same manner, and other arrangements of apertures 16 can be utilised if desired. For example, it is not essential that the apertures 16 are rectangular apertures, and of course there could be apertures in the long sides 12, 13 of the tube in addition to, or in place of, the apertures in the short sides. The number of apertures 16 per row, and the number of rows of apertures on each support may also be varied.

In the example described above the tubular product is of rectangular cross-section. It must be recognised that the same techniques can be applied to the production of apertured tube of other cross-sectional shapes. For example by appropriate configuration of the rolls of the cold rolling station tube of other polygonal cross-section could be produced, as could tubes of circular or other curved wall section.

It will be recognised that since the apertures can be formed in the planar strip material then there is little or no risk of distortion, and the formation of the apertures can be performed with substantially conventional equipment. Moreover, a single production plant can take plane strip from a storage roll and produce finished tube in a continuous, and un broken sequence of operations.

## Claims

1. A method of manufacturing an elongate, longitudinally apertured, metal tube characterized by comprising the steps of,
   starting with an elongate metal strip (17) of width corresponding to the peripheral dimension of the tube to be manufactured,
   forming apertures (16) in the strip (17) in positions directly related to the positions of the apertures required in the tube to be manufactured,
   cold roll forming the apertured strip (17) to a substantially closed, tubular, configuration, and,
   welding the abutting edges (18, 19) of the strip (17) to complete the tube formation.

2. A method as claimed in Claim 1 characterized in that the method is a substantially continuous process in which plane strip (17) passes through a punching station wherein apertures (16) are formed in the strip (17), from the punching station through a series of cold roll forming stations at which the closed configuration is progressively formed, and then through a welding station wherein a continuous welding operation welds the abutting edges (18, 19) of the cold roll formed strip.

3. A method as claimed in Claim 2 characterized in that a severing station is provided downstream of the welding station so that the tube issuing from the welding station is cut into appropriate lengths to constitute predetermined structural supports.

4. A method as claimed in Claim 3 characterized in that the severing station includes a friction saw which moves longitudinally with the tube as it severs the tube transverse to the tube length, returns along the length of the tube through a predetermined distance before gripping the tube and commencing a further transverse cutting operation during which the saw moves longitudinally with the tube.

5. A method as claimed in any one of Claims 2 to 4 characterized in that the welding station utilizes electrical high frequency welding.

6. A method as claimed in any one the preceding claims characterized in that the metal strip is stored on rolls, the end of the strip on one roll being joined to the beginning of the strip on another roll before apertures are formed in the strip.

7. An apparatus for manufacturing elongate, longitudinally apertured metal tube characterized in that the apparatus includes means for performing the steps claims in any one of the preceding claims.

FIG.2.

FIG.I.

FIG.3.

FIG.4.